# EUROPÄISCHE PATENTANMELDUNG

(11) **EP 1 591 627 A1**
(43) Veröffentlichungstag der Anmeldung: **02.11.2005**
(21) Anmeldenummer: 04009998.8
(22) Anmeldetag: 27.04.2004
(51) Int. Cl.: F01D 17/08, G01K 11/32, F04D 27/02

(54) **Regeleinrichtung für einen Kompressor sowie Verwendung eines Bragg-Gitter-Sensors bei einer Regeleinrichtung**

(71) Anmelder: SIEMENS AKTIENGESELLSCHAFT, 80333 München (DE)
(72) Erfinder: Girbig, Paul, Dr., 91080 Uttenreuth (DE); Willsch, Michael, 90762 Fürth (DE)

(57) **Zusammenfassung**

Eine erfindungsgemäße Regeleinrichtung (1) für einen Kompressor (3) umfasst einen faseroptischen Bragg-Gitter-Sensor (FBG), mittels welchem eine Strömungstemperatur (5) eines mittels des Kompressors (3) zu verdichtenden Fluids (7) ermittelbar ist.

Ein weiterer Aspekt der Erfindung bezieht sich auf eine Verwendung eines faseroptischen Bragg-Gitter-Sensors (FBG) als Temperatursensor (9) bei einer Regeleinrichtung (1).

## Beschreibung

Die Erfindung betrifft eine Regeleinrichtung für einen Kompressor sowie eine Verwendung eines Bragg-Gitter-Sensors bei einer Regeleinrichtung. Eine Regeleinrichtung soll dabei auch Schutzeinrichtungen umfassen. Dabei können auch mehrere Bragg-Gitter-Sensoren parallel eingesetzt werden.

Bei einer Vielzahl an technischen Anlagen, beispielsweise Kraftwerksanlagen zur Energieerzeugung, sind Kompressoren und Verdichteranlagen im Einsatz, mittels welcher verschiedene gasförmige und/oder flüssige Fluide verdichtet und einer weiteren Verwendung zugeführt werden.

Beispielsweise wird bei einer Gasturbinenanlage die angesaugte Luft vor Einleitung in die Brennkammer mittels eines Verdichters komprimiert.

Zum sicheren und zerstörungsfreien Betrieb darf eine sogenannte Grenzfördermenge (auch bekannt als "Pumpgrenze" oder "Stabilitätsgrenze") nicht unterschritten werden. Sollte eine momentan von einen Kompressor oder Verdichter zu verarbeitende Fluidströmung kleiner sein als die genannte Grenzfördermenge des Kompressors oder Verdichters, so kann während des Verdichtungsprozesses die Strömung plötzlich insbesondere an den Verdichterschaufeln abreißen, wobei eine mechanische Überlastung möglich ist, da dabei weitaus höhere momentane Drücke auftreten als im Normalbetrieb. Weiterhin kann es zur unerwünschten Erregung niederfrequente Schwingungen kommen und außerdem ist auch eine Überhitzung des Kompressors oder Verdichters möglich.

Um einen möglichst hohen Wirkungsgrad des Kompressors/Verdichters zu erreichen, legt man dessen Betriebspunkt oft möglichst nahe an seine Pumpgrenze oder an sein sogenanntes maximales Schluckvermögen.
Beide genannte Grenzwerte sollen aber während des Betriebs möglichst nicht unter - bzw. überschritten werden, um eine Beschädigung der Anlage zu verhindern.

Bei den meisten Kompressoren und Verdichtern, welche in technischen Anlagen zum Einsatz kommen, ist daher eine Regeleinrichtung erforderlich.

Bei bekannten Regeleinrichtungen wird z.B. ein Modell der Strömungsvorgänge eingesetzt und dabei Grenzkennlinien für den Betrieb ermittelt, welche nicht verletzt werden dürfen.

Je nach Qualität des verwendeten Modells für die Strömungsvorgänge und der Genauigkeit von Messungen, welche während einer Inbetriebnahmephase durchgeführt werden, kann damit eine relative Optimierung des Betriebspunkts vorgenommen und dieser näher an die Grenzkennlinien herangerückt werden.

Jedoch kann dabei auf einen Sicherheitsabstand von den Grenzkennlinien nicht verzichtet werden, da bekannte Messmethoden, beispielsweise zur Temperaturerfassung, aufgrund der in Kompressoren/Verdichtern vorliegenden hohen Drücke und Temperaturen höchstens in Einzelfällen anwendbar sind. Deshalb ist es sehr schwierig, die Pumpgrenze eines Kompressors/Verdichters während der Inbetriebnahmephase zu ermitteln, ohne dass dabei eine unerwünschte starke Belastung auftritt.

Der Erfindung liegt daher die Aufgabe zugrunde, eine verbesserte Regeleinrichtung für einen Kompressor anzugeben. Damit soll insbesondere ein hoher Wirkungsgrad des Kompressors erreichbar sein.

Die Aufgabe wird erfindungsgemäß gelöst durch eine Regeleinrichtung die einen Kompressor mit einem faseroptischen Bragg-Gitter-Sensor, mittels welchem eine Strömungstemperatur eines mittels des Kompressors zu verdichtenden Fluids ermittelbar ist.

Die Erfindung geht dabei von der Überlegung aus, dass zur Detektierung eines beginnenden Strömungsabrisses der Fluidströmung deren Strömungstemperatur herangezogen werden kann.

Bevor ein Strömungsabriss in einem Kompressor/Verdichter auftritt, kommt es in der Strömung zu Temperaturerhöhungen. Die Ursache dafür liegt in der Tatsache, dass dabei in Folge des sich anbahnenden Strömungsabrisses ein Massenvolumen an komprimiertem Fluid mehrfach die Energiezufuhr durch das Verdichterlaufrad erfährt. Dadurch steigt die Temperatur des Fluids innerhalb eines sehr kurzen Zeitraums von beispielsweise unter 1 sec. stark an, da das Verdichterrad seine Energie nun in Form von Reibungswärme an das Fluid abgibt und nicht in den Fluidtransport investiert.

Da der genannte Temperaturanstieg in einem kurzen Zeitraum passiert, ist er mit konventioneller Sensortechnik und mit der erforderlichen Genauigkeit nicht ermittelbar.

Daher ist bei einer erfindungsgemäßen Regeleinrichtung ein faseroptischer Bragg-Gitter-Sensor vorgesehen, mittels welchem die genannte Temperatur schnell und genau genug ermittelt werden kann.

Deshalb ist bei einer erfindungsgemäßen Regeleinrichtung im Unterschied zu bekannten Einrichtungen keine ersatzweise Erfassung von Drücken in der Fluidströmung zwingend erforderlich. Im Stand der Technik wird mittels Drucksensoren die Ausbildung von Druckwellen in der Fluidströmung detektiert und gemessen. Jedoch können die Drucksensoren die Druckstöße erst registrieren, wenn der Strömungsabriss bereits aufgetreten ist. Im Unterschied dazu ist mittels einer erfindungsgemäßen Regeleinrichtung bereits ein sich anbahnender Strömungsabriss mittels einer Ermittlung der Strömungstemperatur des zu verdichtenden Fluids möglich, da dieser ein charakteristisches Temperaturprofil aufweist.

Der faseroptische Bragg-Gitter-Sensor oder ein zusätzlicher Bragg-Gitter-Sensor kann weiterhin zur Ermittlung von Druckschwankungen des Fluids und Materialspannungen bezüglich des Kompressors verwendet werden.

Ein wesentlicher Vorteil einer erfindungsgemäßen Regeleinrichtung liegt darin, dass in Folge der sicheren Ermittlung eines sich ankündigenden Strömungsabrisses der Betriebspunkt des Kompressors näher an die Stabilitätsgrenze des Kompressors gelegt werden kann. Dadurch ist ein erhöhter Wirkungsgrad möglich.

Weiterhin wird mit einer erfindungsgemäßen Regeleinrichtung die Notwendigkeit vermieden, in praktischen Versuchen vor dem normalen Betrieb des Kompressors dessen Grenzkennlinien in materialbelastenden Prüfungen zu ermitteln.

Schließlich ist die Effizienz einer erfindungsgemäßen Regeleinrichtung im Unterschied zu den bekannten fluidzustandsabhängigen Grenzkennlinien auf jeden Betriebszustand des Kompressors und jeden Zustand und jede Zusammensetzung des Fluids anwendbar.

In vorteilhafter Ausgestaltung umfasst der Bragg-Gitter-Sensor einen Lichtwellenleiter, welcher mindestens zwei Bereiche unterschiedlicher Brechzahl aufweist.

Wird nun Licht eines weißen Farbspektrums in den Lichtwellenleiter geleitet, so ergibt sich in Folge von gewollten Interferenzen im Lichtwellenleiter eine monochromatische Reflexion einer bestimmten Wellenlänge.

Diese Wellenlänge ist bestimmt durch die gewählten Werte für die Brechzahlen sowie den Abstand zwischen den Bereichen unterschiedlicher Brechzahlen.

Eine Spannungsbeanspruchung des Lichtwellenleiters - beispielsweise durch Ziehen, Stauchen oder Verbiegen - führt zu einer Veränderung des Abstands zwischen zwei Bereichen gleicher Brechzahl und damit zu einer Veränderung der Wellenlänge des reflektierten Lichts. Deshalb kann der Bragg-Gitter-Sensor als Drucksensor betrieben werden um beispielsweise mechanische Spannungen quantitativ zu erfassen.

Setzt man den Bragg-Gitter-Sensor wie bei einer erfindungsgemäßen Regeleinrichtung vorgesehen einer Strömungstemperatur aus, so verändert sich mindestens die Brechzahl eines Bereichs des Bragg-Gitter-Sensors und die Wellenlänge des reflektierten Lichts wird in Abhängigkeit vom Temperaturverlauf verschoben.

Trägt man dafür Sorge, dass der Bragg-Gitter-Sensor bei seinem Einsatz als Temperatursensor keiner mechanischen Beanspruchung ausgesetzt ist, so ist die sich einstellende Wellenlänge des reflektierten Lichts ein Maß für die in der Fluidströmung vorherrschende Strömungstemperatur.

Falls sowohl eine Temperatur- als auch eine Druckmessung gewünscht ist, so können mehrere, insbesondere zwei, Bragg-Gitter-Sensoren hintereinander geschaltet werden, wobei der Temperatursensor vor der Beaufschlagung mit mechanischen Spannungen geschützt werden muss, um eine Abhängigkeit dessen reflektierter Wellenlänge von mechanischen Spannungseinflüssen auszuschließen und auf eine Abhängigkeit von der zu messenden Temperatur zu beschränken.

Ein weiterer wesentlicher Vorteil eines Bragg-Gitter-Sensors insbesondere zur Temperaturmessung im Vergleich zu bekannten Sensoren besteht in dessen praktisch zu vernachlässigender Zeitkonstante. Eine Veränderung der zu messenden Temperatur hat eine sofortige Änderung der reflektierten Wellenlänge zur Folge, ohne dass Einschwing- oder Abklingvorgänge stattfinden.

Die Erfindung führt weiterhin zu einer Verwendung eines faseroptischen Bragg-Gitter-Sensors als Temperatursensor bei einer Regeleinrichtung.

Vorteilhaft ist die Regeleinrichtung dabei einem Kompressor zugeordnet, mittels welchem ein Fluid verdichtbar ist, wobei das Fluid gasförmig oder flüssig sein kann.

Besonders vorteilhaft wird dabei mittels des Temperatursensors eine Strömungstemperatur des Fluids ermittelt.

Im folgenden wird ein Ausführungsbeispiel der Erfindung näher dargestellt. Es zeigen:
- FIG 1: einen faseroptischen Bragg-Gitter-Sensor zum Einsatz bei einer erfindungsgemäßen Regeleinrichtung,
- FIG 2: einen faseroptischen Bragg-Gitter-Sensor als Temperatursensor, und
- FIG 3: eine erfindungsgemäße Regeleinrichtung für einen Kompressor.

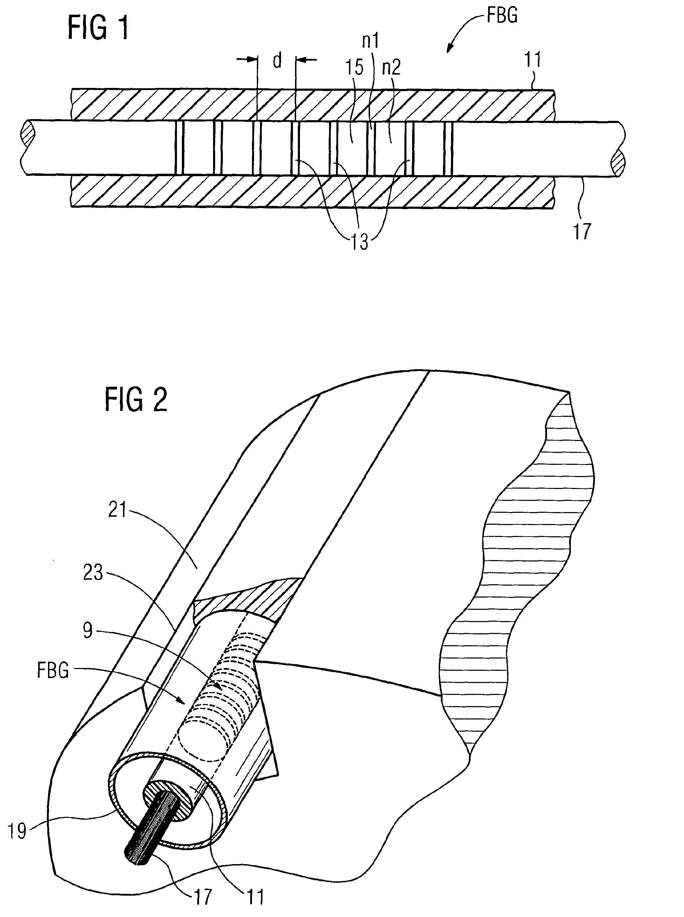

In der FIG 1 ist ein Bragg-Gitter-Sensor FBG dargestellt. Dieser Sensor umfasst einen Lichtwellenleiter 11 mit einer optischen Faser 17.

Die optische Faser 17 weist mindestens zwei Bereiche 13, 15 auf, welche eine zueinander unterschiedliche Brechzahl n1, n2 aufweisen.

Der Abstand zwischen zwei Bereichen gleicher Brechzahl ist mit d gekennzeichnet.

Der Bragg-Gitter-Sensor FBG kann dabei integraler Bestandteil eines Lichtwellenleiterkabels sein, welches eine Gesamtlänge von 1 km oder mehr aufweisen kann. Die Bereiche unterschiedlicher Brechzahlen n1, n2 können dabei als optische Linsen aufgefasst werden, wobei die Brechzahlen n1, n2 und der Abstand d Auslegungsvariablen sind.

Der Bragg-Gitter-Sensor FBG kann hergestellt werden, indem beispielsweise mittels eines UV-Lasers und einer Belichtungsmaske die oben genannte Linseneigenschaften in die optische Faser 17 eingebracht werden.

Der Bragg-Gitter-Sensor FBG kann eine Längenausdehnung von z.B. ca. 5 mm aufweisen.

Infolge einer mechanischen Beanspruchung des Bragg-Gitter-Sensors FBG verändert sich durch Ziehen, Biegen oder Stauchen der Abstand d. Eine Beaufschlagung des Bragg-Gitter-Sensors FBG mit einer sich verändernden Temperatur führt zu einer Veränderung mindestens einer der Brechzahlen n1, n2.

Sowohl eine Veränderung des Abstands d als auch eine Veränderung mindestens einer der Brechzahlen n1, n2 führen zu einer charakteristischen Verschiebung der Wellenlänge der monochromatischen Reflexion und sind daher ein Maß für eine mechanische bzw. eine Temperaturbeanspruchung.

In der FIG 2 ist ein Temperatursensor 9 dargestellt, welcher einen Bragg-Gitter-Sensor FBG umfasst.

Der Bragg-Gitter-Sensor FBG umfasst dabei mindestens einen Abschnitt eines Lichtwellenleiters 11 mit einer optischen Faser 17.

Damit mittels des Temperatursensors 9 eine möglichst genaue Temperaturmessung möglich ist, muss der Bragg-Gitter-Sensor FBG vor einer mechanischen Beanspruchung insbesondere vor einwirkenden Druckkräften geschützt werden, da diese zu einer Verfälschung des Messergebnisses führen würden infolge einer Verschiebung des monochromatischen reflektierten Lichts durch die Veränderung des Abstands d unter Druckeinwirkung.
Um dies zu verhindern, ist der Lichtwellenleiter 11 des Temperatursensors 9 lose in eine Stahlhülse 19 eingelegt, so dass äußere mechanische Kräfte nicht auf den Lichtwellenleiter 11 und insbesondere nicht auf den Bragg-Gitter-Sensor FBG einwirken können.

Ein Messobjekt 21 kann beispielsweise ein Maschinengehäuse, z.B. eines Kompressors, sein. Der Temperatursensor 9 wird dann in einen Messkanal 23 des Gehäuses eingelegt und mit dem Gehäuse verschweißt.

Im Falle einer Temperaturmessung eines Fluids ist der Messkanal 23 vom Fluid durchströmt.

Die Breite des Messkanals kann 1 mm oder sogar weniger betragen.

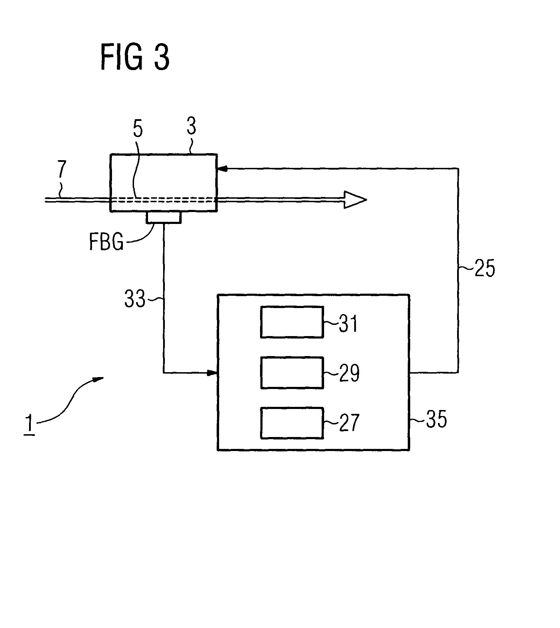

FIG 3 zeigt eine erfindungsgemäße Regeleinrichtung 1 für einen Kompressor 3.

Der Kompressor 3 dient dabei zur Komprimierung eines Fluids 7, welches durch den Kompressor 3 geleitet wird.

Zur Detektierung eines sich anbahnenden Strömungsabrisses des Fluids 7 ist ein Bragg-Gitter-Sensor FBG vorgesehen. Mittels dieses Sensors können auch starke und kurzzeitige Temperaturveränderungen bezüglich einer Strömungstemperatur 5 des Fluids 7 ermittelt werden, da der Sensor praktisch keine Einschwing- und Abklingzeitkonstante aufweist.

Mindestens ein Signal des Bragg-Gitter-Sensors FBG wird als ein die Strömungstemperatur 5 kennzeichnender Temperaturmesswert 33 an eine Verarbeitungseinheit 35 übermittelt.

Die Verarbeitungseinheit 35 kann alternativ oder in Kombination eine Gradientenerfassung 27, ein neuronales Netz 29 und ein mathematisches Modell 31 umfassen.

Die Gradientenerfassung 27 erlaubt eine Auswertung des Temperaturmesswerts 33 dahingehend, ob eine schnelle und/oder starke Temperaturveränderung bezüglich der Strömungstemperatur 5 vorliegt.

Das Neuronale Netz 29 kann ein erlerntes Temperaturverhalten bezüglich einer stabilen Strömung umfassen und selbstlernend ausgelegt sein, um auch instabile Strömungsverhältnisse, insbesondere Strömungsabrisse, im Vorfeld ihres Auftretens detektieren zu können.

Da mathematische Modell 31 kann ein klassisches Modell sein, mittels welchem ein Verdichtungsprozess simuliert wird, welcher mittels des Kompressors 3 durchgeführt wird.

Die Verarbeitungseinheit 35 liefert ein Steuersignal 25 an den Kompressor 3, um gegebenenfalls mittels einer Leistungsrücknahme oder einer Öffnung von Bypass-Ventilen den Kompressor 3 zu schützen, falls mittels des Bragg-Gitter-Sensors FBG beziehungsweise mittels des Temperaturmesswerts 33 und einer oder mehrerer der genannten Auswerteeinheiten 27, 29, 31 ein beginnender Strömungsabriss ermittelt wurde.

Die Gradientenerfassung 27 dient insbesondere zur Erfassung eines schnellen Temperaturanstiegs des Fluids 7. Allein ein derartiger Temperaturanstieg kann ein sicherer Indiz für einen sich anbahnenden Strömungsabriss sein.

Die Genauigkeit und das Ansprechverhalten der Regeleinrichtung 1 können mittels einer Verknüpfung der Ergebnisses der Auswerteeinheiten 27, 29 und 31 sehr genau festgelegt werden.

## Patentansprüche

1. Regeleinrichtung (1) für einen Kompressor (3),
**gekennzeichnet durch** einen faseroptischen Bragg-Gitter-Sensor (FBG), mittels welchem eine Strömungstemperatur (5) eines mittels des Kompressors (3) zu verdichtenden Fluids (7) ermittelbar ist.

2. Regeleinrichtung (1) nach Anspruch 1,
**dadurch gekennzeichnet, dass** der Bragg-Gitter-Sensor (FBG) einen Lichtwellenleiter (11) umfasst, welcher mindestens zwei Bereiche (13,15) unterschiedlicher Brechzahl (n1, n2) aufweist.

3. Verwendung eines faseroptischen Bragg-Gitter-Sensors (FBG) als Temperatursensor (9) bei einer Regeleinrichtung (1).

4. Verwendung nach Anspruch 2,
**dadurch gekennzeichnet, dass** die Regeleinrichtung (1) einem Kompressor (3) zugeordnet ist, mittels welchem ein Fluid (7) verdichtbar ist.

5. Verwendung nach Anspruch 3,
**dadurch gekennzeichnet, dass** mittels des Temperatursensors (9) eine Strömungstemperatur (5) des Fluids (7) ermittelt wird.
